Europäisches Patentamt

European Patent Office

Office européen des brevets

(19)

(11) Numéro de publication : **0 493 242 A1**

# (12) DEMANDE DE BREVET EUROPEEN

(21) Numéro de dépôt : **91403519.1**

(22) Date de dépôt : **23.12.91**

(51) Int. Cl.$^5$ : **C01G 23/00,** C01G 31/00, C01G 33/00, C01B 13/14

(30) Priorité : **28.12.90 FR 9016419**

(43) Date de publication de la demande :
**01.07.92 Bulletin 92/27**

(84) Etats contractants désignés :
**AT BE CH DE DK ES FR GB GR IT LI LU NL SE**

(71) Demandeur : **RHONE-POULENC CHIMIE**
**25, quai Paul Doumer**
**F-92408 Courbevoie Cédex (FR)**

(72) Inventeur : **Iltis, Alain**
**135, rue Danielle Casanova**
**F-93300 Aubervilliers (FR)**
Inventeur : **Seguelong, Thierry**
**121, avenue Pablo Picasso**
**F-92000 Nanterre (FR)**
Inventeur : **Menet, Hubert**
**58 A, rue Baechel**
**F-68470 Mitzach (FR)**

(74) Mandataire : **Dubruc, Philippe et al**
**RHONE-POULENC CHIMIE Service**
**IOM/BREVETS, 25,quai Paul Doumer**
**F-92408 Courbevoie (FR)**

(54) **Composés notamment à base de titane, de vanadium, de niobium, réduits, en particulier du type titanites et leur préparation.**

(57)  La présente invention concerne un composé à base d'un premier élément, notamment le titane, le vanadium ou le niobium, d'une terre-rare et d'oxygène et dans lequel le premier élément présente au moins en partie un nombre d'oxydation inférieur à son nombre d'oxydation maximum.

Le procédé de préparation consiste à calciner sous une atmosphère réductrice un composé intermédiaire comprenant ledit premier élément dans un état d'oxydation plus élevé que celui dans lequel il est présent dans le composé préparé, ce composé intermédiaire étant obtenu par une voie chimique.

On prépare ainsi par exemple $PrTiO_3$ à partir de $Pr_2Ti_2O_7$. On peut obtenir plus généralement des composés correspondant à des solutions solides soit du premier élément soit de la terre-rare dans une structure pérovskite de type $PrTiO_3$.

FIG.1

← 5000          x : 2 theta          70 000 →

EP 0 493 242 A1

La présente invention concerne des composés à base d'un élément réduit des groupes 4A ou 5A, d'au moins une terre-rare éventuellement partiellement substituée par au moins un élément des groupes 2A 3B, 5B ou des actinides et d'oxygène ainsi que leur procédé de préparation.

Par élément réduit, on entend un élément présentant au moins pour une partie un nombre d'oxydation inférieur au nombre d'oxydation maximum dudit élément.

Plus particulièrement la présente demande concerne notamment des composés du type des titanites, des vanadites ou des niobites de terres-rares.

De tels composés, comme par exemple le titanite de praséodyme, peuvent être utilisés notamment dans la fabrication de couches anti-reflet grâce à leurs propriétés d'absorption des ultraviolets, dues à la présence de titane (III) dans leur structure.

Ce type de composés est généralement fabriqué en faisant réagir à l'état solide, un oxyde de titane, de vanadium ou encore de niobium, cet élément se présentant à l'état réduit, avec au moins un oxyde d'un élément choisi parmi les terres-rares.

Or la préparation de ces composés par cette voie dite de "chamottage" ne permet pas toujours d'obtenir des produits de pureté suffisante. De plus, les procédés sont difficiles à mettre en oeuvre car ils nécessitent l'utilisation de réactifs peu courants, souvent difficiles à préparer ou à utiliser.

Un premier objet de l'invention est par conséquent un procédé utilisant des produits de départ facilement préparables et disponibles.

Un autre objet de l'invention est un procédé suffisamment souple pour permettre d'obtenir une gamme importante de produits.

Un autre objet de l'invention est un procédé permettant d'obtenir des composés de bonne pureté.

Un dernier objet de l'invention est un procédé conduisant à des poudres de granulométrie fine.

Dans ce but, le procédé selon l'invention de préparation d'un composé à base d'un premier élément choisi dans les groupes 4A ou 5A de la classification périodique des éléments, présentant au moins pour une partie un nombre d'oxydation inférieur au nombre d'oxydation maximum de ce premier élément, d'au moins un second élément choisi parmi les terres-rares éventuellement partiellement substitué par au moins un troisième élément choisi dans les groupes 2A, 3B, 5B ou des actinides et d'oxygène, consiste à préparer un composé intermédiaire comprenant ledit premier élément dans un état d'oxydation plus élevé que celui dans lequel il est présent dans le composé préparé, au moins un second élément éventuellement substitué par au moins un troisième et de l'oxygène en mélangeant une solution d'un sel ou un sol d'oxyde d'un premier élément précité, et une solution d'un sel d'au moins un second élément précité; en séchant ledit mélange et en calcinant le produit résultant; le composé intermédiaire ainsi obtenu subissant en outre une calcination complémentaire sous une atmosphère réductrice.

Selon un autre mode de réalisation de l'invention, le procédé selon l'invention, pour la préparation d'un composé du même type que celui décrit ci-dessus, consiste à préparer un composé intermédiaire comprenant ledit premier élément dans un état d'oxydation plus élevé que celui dans lequel il est présent dans le composé préparé, au moins un second élément éventuellement substitué par au moins un troisième et de l'oxygène, en formant une solution des sels d'un premier élément précité et d'au moins un second élément précité; en faisant réagir un agent précipitant avec ladite solution; en séchant le précipité obtenu, et en calcinant le produit séché, le composé intermédiaire ainsi obtenu subissant en outre une calcination complémentaire sous une atmosphère réductrice.

Par ailleurs, les composés d'un premier groupe selon l'invention correspondent à la formule suivante :

$$(I) \qquad AB_xO_y$$

dans laquelle :

. A représente au moins un élément choisi parmi les terres-rares, A étant éventuellement partiellement substitué par au moins un élément choisi dans le groupe 2A, 3B, 5B ou des actinides de la classification périodique des éléments,

. B représente un élément choisi dans le groupe 4A ou 5A de la classification périodique des éléments,

. x et y vérifient les inégalités suivantes :

$2,5 \leqq y \leqq 4$

. si $x < 1$

$1,5 + 1,25\,x \leqq y \leqq 1,5 + 1,75\,x$

. si $x \geqq 1$

$1,5 + 1,25\,x \leqq y \leqq 1,5 + 1,5\,x$

à l'exclusion des composés de formule (I) dans laquelle A est une terre-rare, B est le titane ou le vanadium, x = 1 et y = 3.

En outre selon un second groupe, les composés de l'invention sont à base de titane aux degrés d'oxydation (III) et (IV), d'au moins une terre-rare plus particulièrement choisie parmi le lanthane, le cérium, le néodyme et le praséodyme, éventuellement partiellement substituée par au moins un troisième élément tel que défini précédemment et d'oxygène et ils sont caractérisés en ce que le rapport atomique du titane à la somme des terres-rares varie entre 0,90 et 0,75.

Selon un troisième groupe, les composés de l'invention à base de titane aux degrés d'oxydation (III) et (IV), d'au moins une terre-rare plus particulièrement choisie parmi le lanthane, le cérium, le praséodyme et le néodyme, éventuellement partiellement substituée par au moins un troisième élément tel que défini précédemment et d'oxygène, sont caractérisés en ce que le rapport atomique du titane à la somme des terres-rares varie entre 1 et 0,95.

Selon un quatrième groupe, les composés de l'invention à base de titane, d'au moins une terre-rare plus particulièrement choisie parmi le lanthane, le cérium, le praséodyme et le néodyme, éventuellement partiellement substituée par au moins un troisième élément tel que défini précédemment et d'oxygène, sont caractérisés en ce que le rapport atomique du titane à la somme des terres-rares est de 0,66.

Enfin, la présente invention décrit un composé à base d'un premier élément choisi dans les groupes 4A ou 5A de la classification périodique des éléments, présentant au moins pour une partie un nombre d'oxydation inférieur au nombre d'oxydation maximum de ce premier élément, d'au moins un second élément choisi parmi les terres-rares éventuellement partiellement substitué par au moins un troisième élément choisi dans les groupes 2A, 3B, 5B ou des actinides et d'oxygène, à l'exception de composés correspondant à la formule suivante :

$$(I) \qquad AB_xO_y$$

dans laquelle

A est une terre-rare,

B est le titane ou le vanadium,

x = 1 et y = 3,

susceptible d'être obtenu en préparant un composé intermédiaire comprenant un premier élément dans un état d'oxydation plus élevé que celui dans lequel il est présent dans le composé préparé, au moins un second élément éventuellement partiellement substitué par au moins un troisième et de l'oxygène, ledit composé intermédiaire étant obtenu :

– soit en mélangeant une solution d'un sel ou un sol d'oxyde d'un premier élément précité et une solution d'un sel d'au moins un second élément précité, en séchant ledit mélange et en calcinant le produit résultant;

– soit en formant une solution des sels d'un premier élément précité et d'au moins un second élément précité, en faisant réagir un agent précipitant avec ladite solution, en séchant le précipité obtenu, et en calcinant le produit séché;

le composé intermédiaire ainsi obtenu subissant en outre une calcination complémentaire sous une atmosphère réductrice.

Le procédé de l'invention est particulièrement intéressant dans la mesure où il permet de partir de produits dans lesquels le premier élément est à son état d'oxydation le plus élevé, c'est-à-dire les produits les plus facilement disponibles, par exemple sous forme de titane (IV). En outre, d'une manière inattendue, ce procédé donne des produits de pureté élevée, par exemple dans le cas des titanites, on n'observe pas la présence de carbure de titane, impureté classique de ce genre de produit.

En outre, les composés susceptibles d'être préparés par le procédé de l'invention forment une gamme large de produits. Parmi ceux-ci, on peut trouver des produits dans lesquels le rapport premier élément/second élément éventuellement partiellement substitué est inférieur à 1, et qui gardent cependant des propriétés d'application sensiblement identiques à celles des produits pour lesquels ce rapport est d'au moins 1. Il s'agit là d'un intérêt économique dans la mesure où le second élément, par exemple une terre-rare, est généralement un produit relativement cher.

Il est aussi possible de faire varier d'une manière continue l'indice de réfraction ou la résistivité des composés en jouant sur le rapport du premier élément au second éventuellement partiellement substitué et l'état d'oxydation du premier élément.

Par ailleurs, il permet de préparer des poudres dont la taille des particules est inférieure à 10µm.

Mais d'autres caractéristiques et avantages apparaîtront plus clairement à la lecture de la description et des dessins annexés dans lesquels :

– la figure 1 est un spectre obtenu par diffraction des rayons X d'une famille de composés de l'invention (appelée par la suite groupe I)

– la figure 2 est un spectre obtenu par diffraction des rayons X d'une famille de composés de l'invention (appelée par la suite groupe II)

– la figure 3 est un spectre obtenu par diffraction des rayons X d'une famille de composés de l'invention (appelée par la suite groupe III)

– la figure 4 est un spectre obtenu par diffraction des rayons X d'une famille de composés de l'invention (appelée par la suite groupe IV).

EP 0 493 242 A1

Ainsi, le procédé selon l'invention concerne la préparation d'un composé à base d'un premier élément, choisi dans les groupes 4A ou 5A de la classification périodique des éléments, présentant au moins pour une partie un nombre d'oxydation inférieur au nombre d'oxydation maximum de ce premier élément, d'au moins un second élément choisi parmi les terres-rares éventuellement partiellement substitué par au moins un troisième élément choisi dans les groupes 2A, 3B, 5B ou des actinides et d'oxygène.

Les produits obtenus par le procédé de l'invention seront étudiés plus en détail dans la suite de la description. Toutefois, quelques indications générales vont être données ici au préalable pour définir plus précisément le cadre de l'invention.

Les produits concernés sont à base d'au moins quatre éléments.

Le premier élément est choisi dans le groupe 4A ou 5A de la classification périodique selon le supplément au Bulletin de la Société Chimique de France n° 1, janvier 1966, à laquelle il sera fait référence pour l'ensemble de la description.

Ce premier élément peut être tout particulièrement le titane.

Ce peut être aussi le vanadium ou le niobium.

Comme on l'a vu plus haut, le premier élément peut présenter, au moins en partie, dans les composés de l'invention, un nombre d'oxydation inférieur au nombre d'oxydation maximum que ce premier élément peut présenter, nombre qui est celui correspondant généralement à l'état le plus stable dans les conditions normales.

Ainsi, le titane présente un nombre d'oxydation d'au plus (IV), le vanadium et le niobium d'au plus (V). Les composés de l'invention pourront comprendre par exemple du titane à un nombre d'oxydation de (III) ou de (II), éventuellement en combinaison avec du titane à un nombre d'oxydation de (IV).

On notera que le premier élément peut se présenter en partie avec un nombre d'oxydation donné et pour l'autre partie avec un nombre d'oxydation différent.

Les composés de l'invention sont à base en outre d'un second élément. Ce second élément est choisi parmi les terres-rares.

Il est bien sûr possible sans sortir du cadre de l'invention de préparer des composés mixtes, c'est-à-dire comprenant au moins deux de ces seconds éléments.

Par terres-rares, on entend ici l'yttrium et les éléments dont le numéro atomique varie de 57 à 71 de la classification. On peut citer à titre d'exemple le lanthane, le cérium, le praséodyme ou le néodyme.

Par ailleurs, le second élément précité peut être éventuellement partiellement substitué par au moins un troisième élément choisi dans le groupe 2A, 3B, 5B ou des actinides. Comme troisième élément, on peut citer le calcium, le thallium, le bismuth, les éléments dont le numéro atomique est supérieur à 90 et plus particulièrement le thorium.

Enfin, les composés de l'invention contiennent de l'oxygène au titre de quatrième élément.

Une des caractéristiques de l'invention réside dans le fait que les composés précités sont préparés à partir de composés intermédiaires à base des mêmes éléments que ceux décrits plus haut. La différence réside dans le fait que dans le composé intermédiaire le premier élément est présent essentiellement dans un état d'oxydation plus élevé que celui dans lequel il est présent dans le composé final. Il s'agira généralement de l'état d'oxydation maximale.

Par exemple, pour préparer un composé selon l'invention à base de titane (III), on partira d'un composé intermédiaire à base de titane (IV).

Une autre différence entre les composés intermédiaires et ceux selon l'invention peut éventuellement résider dans les rapports du premier élément à la somme des seconds éléments éventuellement partiellement substitués par au moins un troisième.

Comme composés intermédiaires, on peut citer tout particulièrement les polytitanates, c'est-à-dire les produits pour lesquels le rapport $TiO_2/MO$ ou $TiO_2/M_2O_3$ est supérieur à 1, M désignant ici le second élément. On peut citer comme exemple les composés $M_2Ti_2O_7$, M étant une terre-rare par exemple le praséodyme $Pr_2Ti_2O_7$.

On peut citer les vanadates et plus particulièrment les orthovanadates de terres-rares, les pyrovanadates, les métavanadates.

On peut aussi mentionner les niobates, en particulier les métaniobates et les orthoniobates.

Une caractéristique du procédé de l'invention est qu'il met en oeuvre un composé intermédiaire obtenu par voie chimique.

On peut envisager pour cette voie chimique diverses préparations utilisant pour la plupart des sels des éléments constitutifs dudit composé ou bien encore des sols des oxydes de ceux-ci, dans la mesure où il est possible de les préparer.

On rappelle ici que le terme sol désigne une suspension colloïdale de particules solides dont la taille est habituellement comprise entre 100-1000 Å.

Une première variante, appelée voie "sol-sel", consiste à utiliser avec les sels des seconds, les sols des premiers éléments.

Pour plus de clarté et sans volonté de se limiter, la préparation du composé intermédiaire va être décrite en prenant l'exemple de l'obtention d'un composé à base de titane et d'un second élément.

Ainsi, tout ce qui sera dit par la suite pourra s'appliquer à la préparation de composé à base des éléments cités auparavant, les seconds pouvant être seuls ou en combinaison.

Généralement, le sol de dioxyde de titane (par la suite sol de titane) est constitué de cristallites élémentaires de taille comprise entre 10 et 100 Å, agglomérés en amas submicroniques ayant des tailles variant de 200 à 1000 Å.

Le pH de ce sol est compris entre 0,8 et 2,5, et de préférence compris entre 1,8 et 2,2.

On préfère par ailleurs utiliser un sol dans lequel le titane est sous forme anatase.

Le sol de titane précité peut être obtenu par tout moyen connu. On peut notamment peptiser un gel de dioxyde de titane présentant une taille de cristallites élémentaires d'environ 50 Å, des amas submicroniques de 400 Å environ ainsi qu'éventuellemnt des amas de l'ordre du micron.

Ce gel est obtenu lors du procédé classique de préparation du dioxyde de titane par attaque sulfurique de l'ilménite.

La teneur de ce gel en ions sulfate est comprise entre 3 et 15 % et son acidité est telle que le pH de la suspension aqueuse (300 g/l exprimé en $TiO_2$) est compris entre 1 et 3.

Par ailleurs la teneur en poids en $TiO_2$ du gel peptisé est comprise entre 5 et 35 %.

Un autre mode de préparation d'un sol de titane est décrit dans la demande de brevet français FR 2 633 604 dont l'enseignement est incorporé ici.

Le procédé consiste à hydrolyser un composé du titane exempt de soufre en présence d'au moins un composé choisi parmi des acides présentant soit un groupement carboxyle et au moins deux groupements hydroxyles et/ou amines, soit au moins deux groupements carboxyles et au moins un groupement hydroxyle et/ou amine ou les sels de ces acides.

A titre d'exemple on peut citer parmi les composés de titane, les halogénures ou oxyhalogénures de titane comme le tétrachlorure de titane ou l'oxychlorure de titane.

Parmi les acides présents lors de l'hydrolyse, on peut citer notamment les acides tartrique, citrique, aspartique.

Selon une première étape de cette première variante, on met le sol de titane ou le sol de l'oxyde du premier élément préparé auparavant, en présence d'une solution d'un sel du second. Habituellement, cette solution est une solution aqueuse.

Tous les sels d'acides organiques ou inorganiques conviennent à la mise en oeuvre de l'invention dans la mesure où ils donnent un sel soluble avec le second élément utilisé.

Toutefois, selon un mode de réalisation particulier, on choisit les sels d'acides inorganiques parmi les nitrates ou les chlorures.

Concernant les sels d'acides organiques et selon un second mode de réalisation particulier, ceux-ci sont choisis parmi les sels d'acides carboxyliques aliphatiques saturés ou parmi les sels d'acides hydroxycarboxyliques.

Ainsi, au titre de sels d'acides carboxyliques aliphatiques saturés, on peut citer les formiates, les acétates, les propionates.

Quant aux sels d'acides hydroxycarboxyliques, on utilise habituellement les citrates.

Bien entendu, les proportions des divers éléments sont ajustées en fonction de la stoechiométrie du composé de départ à obtenir et plus particulièrement en fonction du rapport désiré du titane au second élément.

On travaille dans des conditions telles que l'on évite la précipitation des sels, ce qui implique que l'on soit à un pH suffisamment acide. Par ailleurs, il faut se situer dans un domaine de concentration des éléments tel qu'il n'y ait pas apparition d'un gel, mais obtention d'un mélange des éléments dans une phase liquide ou d'une suspension homogène de l'élément du sol dans la solution des autres éléments. Ceci est obtenu en jouant sur la dilution desdits éléments.

En général, la concentration des sels dans le mélange réactionnel est comprise entre 0,1 et 5M.

A titre d'exemple de procédé de préparation du composé de départ par la voie sol-sel, on pourra se référer à la demande de brevet français n° 2 578 240 décrivant la synthèse du titanate de néodyme.

Selon une seconde variante du premier mode de préparation du composé intermédiaire, appelée voie "sel-sel", les réactifs utilisés sont des sels des premiers et seconds éléments.

Ainsi, tout ce qui a été dit précédemment, concernant la nature de la solution et des sels reste valable.

Cependant, il est à noter qu'en ce qui concerne le nitrate de titanyle, il est nécessaire de le préparer auparavant.

Ainsi le nitrate de titanyle est obtenu par réaction de l'ammoniaque sur $TiOCl_2$. Le précipité est ensuite lavé en suivant plusieurs cycles de centrifugations - repulpages afin d'éliminer les chlorures.

Le nitrate de titanyle est obtenu par redissolution du précipité lavé dans de l'acide nitrique molaire dans les proportions telles que le rapport molaire d'acide sur le titane soit voisin de 6.

La seconde étape du premier mode de préparation du composé intermédiaire, identique pour les deux variantes précitées, consiste à sécher le mélange résultant de chacune des premières étapes.

Le séchage d'une part du mélange du sol de titane et de la solution du sel du second élément, ou d'autre part de la solution des sels de titane et du second élément, est effectué selon toute méthode connue de l'homme de l'art.

On pourra donc sécher ledit mélange par évaporation, atomisation ou nébulisation.

Toutefois, ce séchage se fait habituellement par atomisation.

On peut utiliser tout atomiseur classique, par exemple à turbine ou à buse.

Dans ce cas, la température d'entrée des gaz est habituellement comprise entre 200 et 300°C, par exemple voisine de 250°C, celle de sortie peut varier entre 120 et 200°C. On utilise une pression d'air comprise par exemple entre 2 et 3 bars.

Toutefois, il est préférable d'utiliser une atomisation selon une technique plus particulière dans laquelle on sèche le mélange en l'injectant dans un gaz ayant une vitesse suffisante pour atomiser ce mélange, de manière à obtenir un chauffage et un séchage rapide de la solution ou du mélange à sécher. Un tel effet est obtenu justement en mettant en contact le mélange avec un gaz à température élevée et présentant une vitesse élevée par rapport à la vitesse du mélange lors de son injection.

Un tel type de séchage peut être effectué dans un réacteur "flash", par exemple du type mis au point par la Demanderesse et décrit notamment dans les brevets français n° 2 257 326, 2 419 754, 2 431 321. Dans ce cas, les gaz sont animés d'un mouvement hélicoïdal et s'écoulent dans un puits-tourbillon. La suspension est injectée suivant une trajectoire confondue avec l'axe de symétrie des trajectoires hélicoïdales des gaz, ce qui permet de transférer parfaitement la quantité de mouvement des gaz aux particules de cette suspension. Par ailleurs, le temps de séjour des particules dans le réacteur est extrêmement faible, il est en général inférieur à 1/10 de seconde, ce qui supprime tout risque de surchauffe par suite d'un contact trop long avec les gaz.

Selon les débits respectifs des gaz et de la suspension, la température d'entrée des gaz est comprise entre 400 et 700°C, la température du solide séché entre 120 et 160°C.

On obtient un produit sec présentant une granulométrie de l'ordre de quelques microns, plus particulièrement comprise entre 1 et 10 microns.

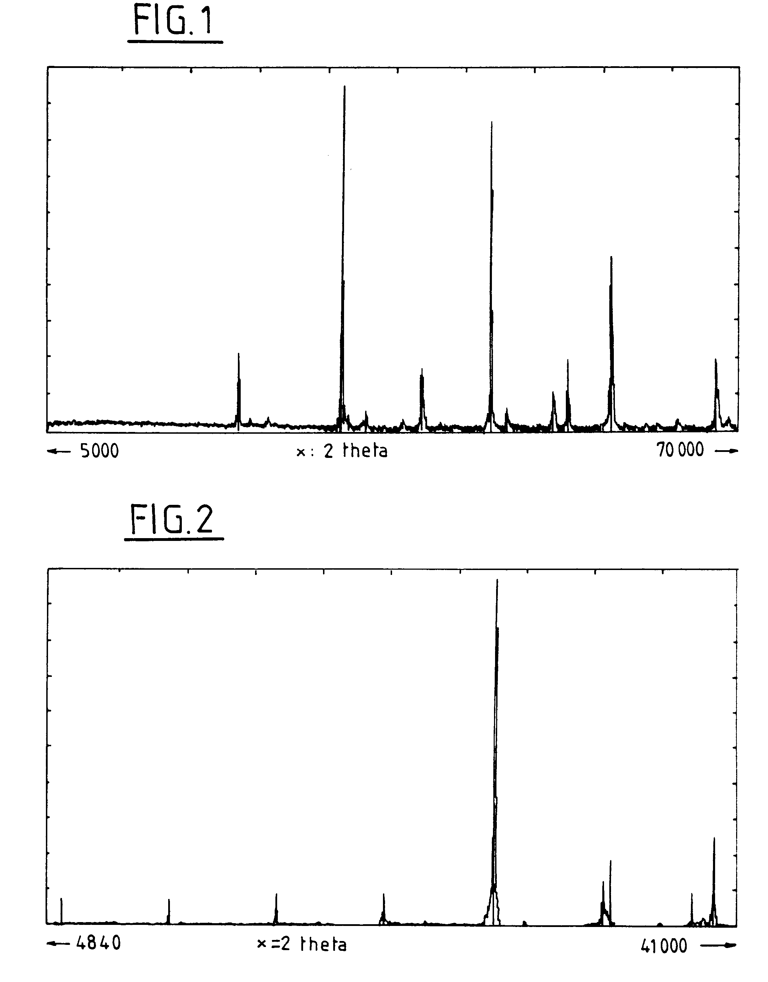

En ce qui concerne le réacteur flash mentionné plus haut, on pourra se référer à la figure 1 de la demande de brevet français n° 2 431 321.

Ledit réacteur est constitué d'une chambre de combustion et d'une chambre de contact composée d'un bicône ou d'un cône tronqué dont la partie supérieure diverge. La chambre de combustion débouche dans la chambre de contact par un passage réduit.

La partie supérieure de la chambre de combustion est munie d'une ouverture permettant l'introduction de la phase combustible.

D'autre part la chambre de combustion comprend un cylindre interne coaxial, définissant ainsi à l'intérieur de celle-ci une zone centrale et une zone périphérique annulaire et présentant des perforations se situant pour la plupart vers la partie supérieure de ladite chambre. Celle-ci comprend au minimum six perforations distribuées sur au moins un cercle, mais de préférence sur plusieurs cercles espacés axialement. La surface totale des perforations localisées dans la partie inférieure de la chambre peut être très faible, de l'ordre de 1/10 à 1/100 de la surface totale des perforations dudit cylindre interne coaxial.

Les perforations sont habituellement circulaires et présentent une épaisseur très faible. De préférence, le rapport du diamètre de celles-ci à l'épaisseur de la paroi est d'au moins 5, l'épaisseur minimale de la paroi étant seulement limitée par les impératifs mécaniques.

Enfin, un tuyau coudé débouche dans le passage réduit, dont l'extrémité s'ouvre dans l'axe de la zone centrale.

La phase gazeuse animée d'un mouvement hélicoïdal (par la suite phase hélicoïdale) est composée d'un gaz, généralement de l'air, introduit dans un orifice pratiqué dans la zone annulaire, de préférence cet orifice est situé dans la partie inférieure de ladite zone.

Afin d'obtenir une phase hélicoïdale au niveau du passage réduit, la phase gazeuse est de préférence introduite à basse pression dans l'orifice précité, c'est-à-dire à une pression inférieure à 1 bar et plus particulièrement à une pression comprise entre 0,2 et 0,5 bar au-dessus de la pression existant dans la chambre de contact.

La vitesse de cette phase hélicoïdale est généralement comprise entre 10 et 100 m/s et de préférence entre 30 et 60 m/s.

Par ailleurs, une phase combustible qui peut être notamment du méthane, est injectée axialement par l'ouverture précitée dans la zone centrale à une vitesse d'environ 100 à 150 m/s.

La phase combustible est enflammée par tout moyen connu, dans la région où le combustible et la phase hélicoïdale sont en contact.

Par la suite le passage imposé des gaz dans le passage réduit se fait suivant un ensemble de trajectoires confondues avec des familles de génératrices d'un hyperboloïde. Ces génératrices reposent sur une famille de cercles, d'anneaux de petite taille localisés près et au-dessous du passage réduit, avant de diverger dans toutes les directions.

On introduit ensuite la substance à traiter sous forme de liquide par le tuyau précité.

Le liquide est alors fractionné en une multitude de gouttes, chacune d'elles étant transportée par un volume de gaz et soumise à un mouvement créant un effet centrifuge.

Habituellement, le débit du liquide est compris entre 0,03 et 10 m/s.

Le rapport entre la quantité de mouvement propre de la phase hélicoïdale à celle du liquide doit être élevé. En particulier il est d'au moins 100 et de préférence compris entre 1000 et 10000.

Les quantités de mouvement au niveau du passage réduit sont calculés en fonction des débits d'entrée du gaz et de la substance à traiter, ainsi que de la section dudit passage. Une augmentation des débits entraîne un grossissement de la taille des gouttes.

Dans ces conditions, le mouvement propre des gaz est imposé dans sa direction et son intensité aux gouttes de la substance à traiter, séparées les unes des autres dans la zone de convergence des deux courants.

La vitesse du liquide est de plus réduite au minimum nécessaire pour obtenir un flot continu.

Le rapport de la masse du liquide et du gaz est bien évidemment choisi en fonction de plusieurs facteurs comme la température du fluide et l'opération à effectuer, comme la vaporisation du liquide.

Il est à noter que cette représentation ou ce fonctionnement du réacteur "flash" ne sont qu'un exemple et que d'autres réalisations ou fonctionnements sont envisageables.

Un second mode de préparation du composé intermédiaire peut être envisagé mettant en oeuvre le principe de la coprécipitation des éléments présents.

Celui-ci consiste, dans une première étape à préparer une solution des sels de titane et de terre-rare de la même façon que décrit dans la première étape de la seconde variante du mode précédent.

Dans une seconde étape, on fait réagir la solution précitée avec un agent précipitant.

Ce dernier peut se présenter sous forme liquide, solide ou gazeuse. Cependant, selon un mode de réalisation préféré de l'invention, la réaction de précipitation est effectuée avec un agent précipitant sous forme de liquide.

On peut utiliser à ce titre les amines aliphatiques, cycliques, benzéniques ou les ammoniums quaternaires dans la mesure où de tels agents donnent, en réagissant avec la solution des sels des éléments requis, un précipité insoluble dans l'eau.

Selon un mode particulier, on choisit l'agent précipitant parmi l'ammoniaque ou un précurseur comme l'urée, la méthylamine, la diméthylamine, la triméthylamine, l'éthylamine, la diéthylamine, la triéthylamine, la dodécylamine, l'oléylamine, la cyclohexylamine, l'aniline.

L'agent précipitant peut être utilisé pur ou dilué dans un solvant.

On peut utiliser tout solvant, y compris l'eau, miscible avec la solution des sels, dans la mesure où il solubilise l'agent précipitant.

A titre d'exemple, on peut citer les alcools saturés comme l'éthanol, le propanol, l'isopropanol.

Les alcools polyhydroxylés conviennent également à la mise en oeuvre de l'invention. Ainsi, on peut citer notamment l'éthylène glycol, le propylène glycol.

Il est de même possible d'utiliser des esters d'acides hydroxycarboxyliques comme le carbonate d'éthylène.

La normalité de la solution de l'agent précipitant est calculée en fonction de la normalité de la solution aqueuse des sels.

Généralement, la concentration en agent précipitant est comprise entre 0,1 et 5M.

Le rapport molaire de l'agent précipitant aux sels varie habituellement de 1 à 10.

La mise en contact de la solution des sels avec l'agent précipitant, pur ou dilué, est effectuée indifféremment en introduisant la solution des sels dans l'agent précipitant ou inversement.

Le cas de l'introduction simultanée des réactifs est de même possible.

Cependant, on procède habituellement en introduisant la solution des sels dans l'agent précipitant, pur ou dilué.

On met de préférence en contact les deux réactifs, c'est-à-dire la solution précitée et l'agent précipitant goutte à goutte.

Pendant l'introduction, il est préférable de maintenir le milieu sous agitation.

On met en oeuvre la réaction à une température comprise entre 0 et 100°C, la limite supérieure étant la vaporisation du mélange de la solution des sels et/ou de l'agent précipitant.

De préférence, on travaille à température comprise entre 20 et 35°C.

Dans le cas particulier où l'on utilise l'urée comme agent précipitant, on introduit celle-ci dans la solution des sels précités, puis on chauffe sous agitation le mélange ainsi obtenu, à une température comprise entre 60 et 65°C, pour décomposer l'urée et libérer ainsi dans le milieu l'agent précipitant proprement dit.

Après l'addition des réactifs, on maintient en général l'agitation pendant une durée de 1 à 3 heures.

On peut éventuellement procéder ensuite à un vieillissement du milieu réactionnel, c'est-à-dire laisser celui-ci reposer pendant une durée comprise entre 6 et 15 heures.

La séparation du précipité est effectuée selon tout moyen connu de l'homme de l'art, comme la filtration, la centrifugation.

Par la suite, on peut éventuellement laver ledit précipité, par exemple avec le solvant dans lequel l'agent précipitant est solubilisé.

Dans une troisième étape, le précipité est séché par tout moyen connu.

Habituellement, le séchage est effectué sous vide à 50°C ou sous air à température ambiante.

La durée de séchage est comprise entre 3 et 12 heures.

Enfin, une dernière étape commune aux deux modes de préparation précités consiste à calciner le produit séché en vue d'éliminer les sels.

La calcination est effectuée sous une atmosphère oxydante, inerte ou sous vide.

Habituellement, on utilise l'air ou un mélange air-oxygène en tant qu'atmosphère oxydante.

On peut aussi calciner le produit sous un gaz inerte du type azote ou gaz rare comme l'argon ; ceux-ci étant utilisés seuls ou en mélange.

En ce qui concerne le vide, ladite calcination est réalisée sous une pression variant entre 1 et 10 mmHg.

La température à laquelle on calcine le produit séché est celle à partir de laquelle les sels sont décomposés. Elle est comprise habituellement entre 600°C et 1150°C.

La durée de la calcination est généralement comprise entre 1 et 3 heures.

Par ailleurs, le composé intermédiaire issu des premier et second modes de préparation peut éventuellement subir un broyage.

A l'issue des étapes qui viennent d'être décrites, on obtient un composé intermédiaire qui subit ensuite une calcination complémentaire sous une atmosphère réductrice.

Il est bien entendu que cette calcination complémentaire peut être effectuée dans un cycle unique de traitement thermique incluant la première calcination qui vient d'être décrite plus haut.

Ainsi, on peut tout d'abord calciner le produit séché précité sous vide afin d'éliminer les sels de la solution initiale, puis sans interrompre le cycle de chauffage, passer sous une atmosphère réductrice, afin de réduire le composé de départ.

Les conditions de calcination sous atmosphère réductrice vont maintenant être décrites plus précisément.

L'atmosphère réductrice est en général constituée par de l'hydrogène ou du méthane ; chacun de ces gaz pouvant être utilisé seul ou en mélange, pur ou dilué dans un gaz inerte.

Habituellement, on utilise les gaz rares comme l'argon en tant que gaz inerte.

La calcination est effectuée à une température variant habituellement entre 1000 et 1700°C.

Il est à noter que les conditions de température dépendent de la nature du composé intermédiaire à calciner.

Par ailleurs, selon un mode de réalisation préféré de l'invention, ces conditions sont telles qu'il y ait au moins fusion partielle de la masse réactionnelle.

La température à laquelle apparait la fusion partielle précitée est déterminée par analyse thermodifférentielle sous air ou sous gaz réducteur du composé de départ.

Ainsi, dans le cas où le composé intermédiaire comprend du titane, la calcination est effectuée à une température d'au moins 1400°C et de préférence d'au moins 1450°C.

Dans le cas où le composé intermédiaire est à base de niobium ou de vanadium, la calcination est effectuée à une température d'au moins 1000°C.

Si nécessaire, la calcination peut être réalisée en présence d'un agent favorisant l'apparition de la phase fondue.

Ainsi, le carbone par exemple (sous la forme de noir de carbone, de graphite ou de résine), les oxydes alcalins ou l'oxyde de bore conviennent parfaitement à la mise en oeuvre de l'invention.

L'oxyde de bore est particulièrement intéressant par son caractère volatil permettant son élimination par sublimation à la fin du traitement.

Enfin, dans le cas des composés de l'invention pour lesquels le second élément peut être partiellement substitué, le troisième élément substituant peut être apporté sous forme d'oxyde, d'hydroxyde ou de carbonate dans le milieu réactionnel.

Une caractéristique intéressante du procédé selon l'invention réside dans sa grande souplesse de mise en oeuvre.

En effet, le procédé de l'invention permet de préparer des composés dans lesquels le rapport atomique, premier élément/second élément éventuellement partiellement substitué peut être différent de 1. Comme les composés intermédiaires les plus facilement disponibles sont généralement des produits dans lesquels ce rapport est égal à 1, il est possible d'effectuer le traitement thermique en présence d'une quantité supplémentaire de premier ou de second élément, généralement sous forme d'oxyde. Par exemple, si on veut obtenir un produit plutôt riche en titane, on pourra lors du traitement thermique ajouter une certaine quantité de $TiO_2$. Pour un produit plutôt riche en terre-rare, en praséodyme par exemple, on pourra effectuer le traitement thermique en présence d'un oxyde de terre-rare, $Pr_6O_{11}$ notamment.

Bien entendu, il est possible d'ajuster le rapport atomique précité lors de la synthèse même du composé intermédiaire en utilisant les réactifs dans les proportions correspondant au rapport désiré.

Selon un mode de réalisation préféré de l'invention, on prépare un composé intermédiaire à base de titane, d'au moins un second élément, ce dernier étant éventuellement partiellement substitué par au moins un troisième élément du type précité et d'oxygène et on le calcine dans des conditions telles que le rapport atomique du titane à la somme des terres-rares soit compris entre 0,5 et 1,6.

Une fois le traitement thermique réalisé, on refroidit le produit obtenu, on obtient alors un composé dans lequel le premier élément a été réduit au moins en partie par rapport au composé de départ.

Le procédé de l'invention peut éventuellement être suivi d'un traitement de recuit dans le but de purifier le produit obtenu. Pour certains composés, le recuit permet d'obtenir des composés du premier groupe présentant une très bonne pureté.

Ce traitement peut se faire sous une atmosphère réductrice ou sous vide.

Tout ce qui a été dit plus haut concernant le type d'atmosphère réductrice reste valable.

En ce qui concerne le vide, habituellement le traitement de recuit est effectué à des pressions variant généralement entre 1 et 10 mmHg.

Le recuit est réalisé généralement à une température supérieure ou égale à celle à laquelle la calcination a été effectuée.

La durée d'un tel traitement varie entre 1 et 3 heures.

Le procédé selon l'invention permet d'obtenir une large gamme de composés qui vont maintenant être décrits plus précisément.

L'obtention de tels types de composés se fait en jouant sur un certain nombre de paramètres du procédé.

Comme paramètres importants, on peut mentionner la vitesse de montée en température, la température maximale ou de palier, l'épaisseur de lit, le rapport atomique du premier élément au second, ce dernier étant éventuellement partiellement substitué.

Ainsi, afin de favoriser la préparation de composés du groupe (I), il est préférable d'opérer dans des conditions plus précises.

Tout d'abord, on a noté que le composé intermédiaire doit être de préférence traité sous la forme d'un lit dont l'épaisseur est faible, c'est-à-dire une épaisseur de quelques dizaine de millimètres.

Par ailleurs, la vitesse de montée en température durant la calcination est telle que la fusion partielle de la masse réactionnelle apparaisse le plus tard possible. En ce sens, la température est augmentée à une vitesse de l'ordre de 20°C/h jusqu'à la température de palier qui se situe de préférence vers 1600°C.

Plus particulièrement, il est possible de chauffer rapidement le mélange, c'est-à-dire à une vitesse de 200°C/h jusqu'à une température proche de la fusion, c'est-à-dire inférieure de 100°C à ladite température, puis de ralentir la vitesse de montée en température à 20°C/h jusqu'à la température de palier précitée.

Une fois la température de palier atteinte, il est intéressant de maintenir celle-ci pendant un temps relativement long, d'environ 4 heures.

En ce qui concerne l'atmosphère sous laquelle est réalisée la calcination, celle-ci est plus particulièrement un gaz ayant un pouvoir réducteur important. On utilise plus particulièrement du méthane ou un mélange méthane / gaz rare.

Enfin, le composé intermédiaire doit présenter de préférence un excès de titane. En effet, le rapport atomique du premier élément sur la somme des terres-rares, éventuellement partiellement substituées, de l'ordre de 1,05.

Afin de favoriser l'obtention de composés du second groupe, il est préférable d'opérer dans les conditions suivantes.

Ainsi, le composé intermédiaire est de préférence calciné sous la forme d'un lit dont l'épaisseur est élevée, c'est-à-dire une épaisseur de 10 centimètres et plus.

Par ailleurs, la vitesse de montée en température durant la calcination est telle que la fusion partielle de la masse réactionnelle apparaisse le plus tôt possible. En ce sens, la température est augmentée à une vitesse de l'ordre de 200°C/h à 600°C/h jusqu'à la température de palier, qui est de l'ordre de 1600°C.

Il est à noter que l'utilisation de $B_2O_3$ durant la calcination afin de faciliter la fusion du mélange est toujours envisageable.

Une fois la température de palier atteinte, il est intéressant de maintenir celle-ci pendant un temps relativement court, c'est-à-dire d'environ 2 heures.

En ce qui concerne l'atmosphère sous laquelle est réalisée la calcination, celle-ci est de préférence un gaz ayant un pouvoir réducteur moins important que dans le cas de la première variante. On utilise plus particulièrement de l'hydrogène ou un mélange hydrogène/ gaz rare.

Enfin, le composé intermédiaire doit présenter de préférence un excès important de terre-rare. En effet, le rapport atomique du titane sur la somme des terres-rares de l'ordre de 0,7.

Les conditions optimales de calcination favorisant l'obtention des composés du groupe (III) sont proches de celles décrites dans la variante précédente, à l'exception de celles portant sur la température de palier et la valeur du rapport atomique.

En effet, la température de palier est plus particulièrement voisine de 1500°C.

En ce qui concerne la valeur du rapport atomique du titane sur la somme des terres-rares, celui-ci est de préférence de l'ordre de 0,95.

Enfin, l'obtention des composés du groupe (IV) est favorisée en opérant dans des conditions proches de celles décrites pour le composé du groupe II, à l'exception du rapport atomique qui doit être de préférence de l'ordre de 0,66.

Les composés selon l'invention vont maintenant être décrits.

La présente invention concerne tout d'abord un premier groupe de composés (I) correspondant à la formule suivante :

$$AB_xO_y$$

dans laquelle :

. A représente au moins un élément choisi parmi les terres-rares, A étant éventuellement partiellement substitué par au moins un troisième élément choisi dans les groupes 2A, 3B, 5B et des actinides de la classification périodique des éléments,

. B représente un élément choisi dans le groupe 4A ou 5A de la classification périodique des éléments,

. x et y vérifient les inégalités suivantes :

$2,5 \leqq y \leqq 4$ et :

. si $x < 1$

$1,5 + 1,25x \leqq y \leqq 1,5 + 1,75x$

. si $x \geqq 1$

$1,5 + 1,25 x \leqq y \leqq 1,5 + 1,5 x$

à l'exclusion des composés de formule (I) dans laquelle A est une terre-rare, B est le titane ou le vanadium, $x = 1$ et $y = 3$.

Selon une première caractéristique préférentielle du composé (I), l'élément B, est majoritairement ou totalement présent à l'état réduit.

Il est rappelé que le terme "réduit" signifie que l'élément considéré présente un nombre d'oxydation inférieur à son nombre d'oxydation maximum.

L'élément B peut être choisi parmi les groupes 4A et 5A de la classification périodique.

Cependant, selon une première variante, l'élément B est le titane.

Une seconde variante est constituée d'un composé (I) à base de vanadium ou de niobium en tant qu'élément B.

Le constituant A du composé (I) représente au moins une terre-rare.

Plus particulièrement, A est choisi parmi le lanthane, le cérium, le praséodyme et le néodyme.

Par ailleurs, outre la terre-rare, l'élément A peut représenter aussi un troisième élément choisi dans ces groupes 2A, 3B, 5B et des actinides, substituant éventuellement en partie la terre-rare précitée.

De préférence, ce troisième élément est choisi parmi le calcium, le bismuth, le thallium, les éléments dont le numéro atomique est d'au moins 90 comme notamment le thorium.

Une autre caractéristique du composé (I) est constituée par le rapport atomique de l'élément B à la somme des éléments A, ou en d'autres termes le coefficient stoechiométrique x; celui-ci varie en effet entre 0,5 et 1,6.

Selon un mode de réalisation particulier, le composé (I) est à base de titane et d'au moins une terre-rare, celle-ci étant éventuellement partiellement subsituée.

De préférence, la terre-rare est le praséodyme.

Diverses formules correspondent à ce mode de réalisation.

Ainsi, l'invention concerne un composé dont le coefficient x vaut 1 et correspondant à la formule suivante : $PrTiO_{2,79}$. L'analyse de ce composé indique la présence de titane aux degrés d'oxydation (II) et (III).

L'invention concerne aussi des composés présentant un coefficient stoechiométrique x compris entre 0,7 et 1, dont les formules sont par exemple les suivantes : $PrTi_{0,77}O_{2,61}$ et $PrTi_{0,83}O_{2,75}$.

Quant aux composés (I) dont le domaine de variation du coefficient stoechiométrique x est compris entre 1,6 et 1, on peut citer notamment le composé de formule $PrTi_{1,6}O_{3,83}$.

Par ailleurs, ce dernier composé est sous la forme d'une maille de structure quadratique ou possédant éventuellement un caractère léger d'orthorhombicité. En effet, il n'est pas possible, étant donné la précision des mesures, de déterminer si les paramètres a et b de la maille sont parfaitement identiques ou non.

Les paramètres sont les suivants :

a = 5,51 Å b étant égal ou sensiblement égal à a
c = 7,63 Å

Enfin, ce même composé présente un spectre obtenu par diffraction des rayons X (raie $K\alpha$ du cuivre), correspondant à la figure 1 et dont les raies sont les suivantes :

| n° raie | 1 | 2 | 3 | 4 | 5 | 6 | 7 |
|---|---|---|---|---|---|---|---|
| d (h,k,l,) | 3,886 | 2,751 | 2,704 | 2,574 | 2,247 | 2,946 | 1,888 |
| intensité | f | TF | tf | tf | f | F | tf |

| n° raie | 8 | 9 | 10 | 11 | 12 | 13 |
|---|---|---|---|---|---|---|
| d (h,k,l,) | 1,741 | 1,702 | 1,697 | 1,589 | 1,378 | 1,374 |
| intensité | tf | tf | tf | m | f | f |

NB        Les codes des intensités sont les suivants :

| Codes | tf | f | mf | m | mF | F | TF |
|---|---|---|---|---|---|---|---|
| % | 0-10 | 10-20 | 20-40 | 40-60 | 60-80 | 80-90 | 90-100 |

Les pourcentages sont exprimés par rapport à la raie la plus intense à laquelle on a donné arbitrairement la valeur 100.

En conclusion et d'une manière générale, les composés du premier groupe correspondent à une solution solide soit du premier élément, soit du second éventuellement substitué en partie, dans une structure pérovskite du type $PrTiO_3$ dont les paramètres de maille a, b et c évoluent continûment selon la composition (le rapport atomique, l'état de réduction du premier élément) entre une structure de type orthorhombique et une structure du type quadratique.

Par ailleurs, les composés du groupe (I) pour lesquels les valeurs de coefficients de x et y sont fixées ont un spectre de diffraction des rayons X homologue d'un second élément à l'autre. On entend par là qu'ils présentent pour des seconds éléments différents d'une part des raies pour des distances respectives sensiblement identiques ou voisines et d'autre part des intensités de raies les unes par rapport aux autres maintenues d'un spectre à l'autre.

Outre le composé décrit précédemment, l'invention concerne aussi un second groupe de composés ou composés (II).

Celui-ci est d'une part à base de titane partiellement réduit au sens défini plus haut. En effet, le titane est présent aux degrés d'oxydation (III) et (IV).

D'autre part, le composé (II) est à base d'oxygène et d'au moins une terre-rare éventuellement partiellement substituée par au moins un troisième élément. Plus particulièrement, la terre-rare est choisie dans le groupe de lanthane, du cérium, du praséodyme et du néodyme.

Le troisième élément peut être choisi en particulier parmi le calcium, le thallium, le bismuth et le thorium.

Une caractéristique importante dudit composé (II) est que le rapport atomique du titane à la somme des terres-rares varie entre 0,90 et 0,75.

Par ailleurs, le composé (II) présente un paramètre de maille c égal à 31,2 ± 0,2 Å.

Selon un premier mode de réalisation de l'invention, le composé (II) comprend du titane, de l'oxygène et du praséodyme en tant que terre-rare et présente un spectre obtenu par diffraction des rayons X (raie Ka du cuivre) correspondant à la figure 2 et dont les raies sont répertoriées dans le tableau ci-dessous, selon la codification précédente.

| n° raie | 1 | 2 | 3 | 4 | 5 | 6 | 7 | 8 | 9 |
|---|---|---|---|---|---|---|---|---|---|
| d (h,k,l,) | 15,284 | 7,728 | 5,159 | 3,879 | 3,110 | 2,501 | 2,570 | 2,281 | 2,230 |
| intensité | tf | tf | tf | tf | TF | tf | f | tf | mf |

Par ailleurs, le composé (II) correspondant à ce premier mode de réalisation se présente sous la forme d'une maille quadratique ou possédant éventuellement un caractère léger d'orthorhombicité. En effet, il n'est pas possible, étant donné la précision des mesures, de déterminer si les paramètres a et b de la maille sont parfaitement identiques ou non.

Les paramètres de mailles sont les suivants :

a = 5,406 Å avec b égal ou sensiblement égal à a

c = 31,19 Å.

Sans volonté de limiter la portée de l'invention, le composé (II) présenterait des analogies structurales avec la phase d'Aurevillius du type $Bi_4Ti_3O_{12}$.

Ces composés, pour lesquels le rapport du titane au second élément et le rapport titane (III), titane (IV) sont fixés, présentent des spectres de diffraction des rayons X homologues, selon la nature du second élément. Ainsi ils présentent un spectre ayant les mêmes raies pour des distances respectives sensiblement identiques ou voisines ainsi que des intensités de raies les unes par rapport aux autres sensiblement maintenues d'un spectre à l'autre.

Selon un second mode de réalisation particulier, le composé (II) est à base de titane, d'oxygène et de néodyme en tant que terre-rare.

Dans ce cas, le paramètre c de la maille dudit composé est égal à 31,2 Å.

Un troisième mode particulier correspond à un composé (II) comprenant le lanthane comme terre-rare, outre le titane et l'oxygène.

Un tel composé présente un paramètre c de maille de 31,27 Å.

La présente invention concerne de même un troisième groupe de composés (III) comprenant du titane, au moins une terre-rare, éventuellement partiellement substituée par au moins un troisième élément et de l'oxygène.

Dans ce nouveau composé, le titane est présent aux degrés d'oxydation (III) et (IV) et la terre-rare est de préférence choisie parmi le lanthane, le cérium, le praséodyme et le néodyme.

Le troisième élément peut être choisi parmi le calcium, le bismuth, le thallium et le thorium.

De plus, ce composé présente un rapport atomique du titane à la somme des terres-rares compris entre 1 et 0,95.

Sans volonté de limiter la portée de l'invention, les composés (III) seraient de façon générale isotypes des phases de structure cristalline orthorhombique du type $Ln_2Ti_2O_7$ (avec Ln représentant une terre-rare) avec toutefois des paramètres de mailles a, b et plus particulièrement c, différents.

Il est à noter que ces composés, pour lesquels le rapport du titane au second élément et le rapport titane (III), titane (IV) sont fixés, présentent des spectres de diffraction des rayons X homologues, selon la nature du second élément. Ainsi ils présentent un spectre ayant les mêmes raies pour des distances respectives sensiblement identiques ou voisines ainsi que des intensités de raies les unes par rapport aux autres sensiblement maintenues d'un spectre à l'autre.

Selon un mode de réalisation particulier de l'invention, le composé (III) est à base de titane, d'oxygène et de praséodyme.

Dans ce cas, la maille cristalline est du type orthorhombique et ses paramètres sont les suivants :

a = 5,1 Å

b = 7,75 Å
c = 27,55 Å

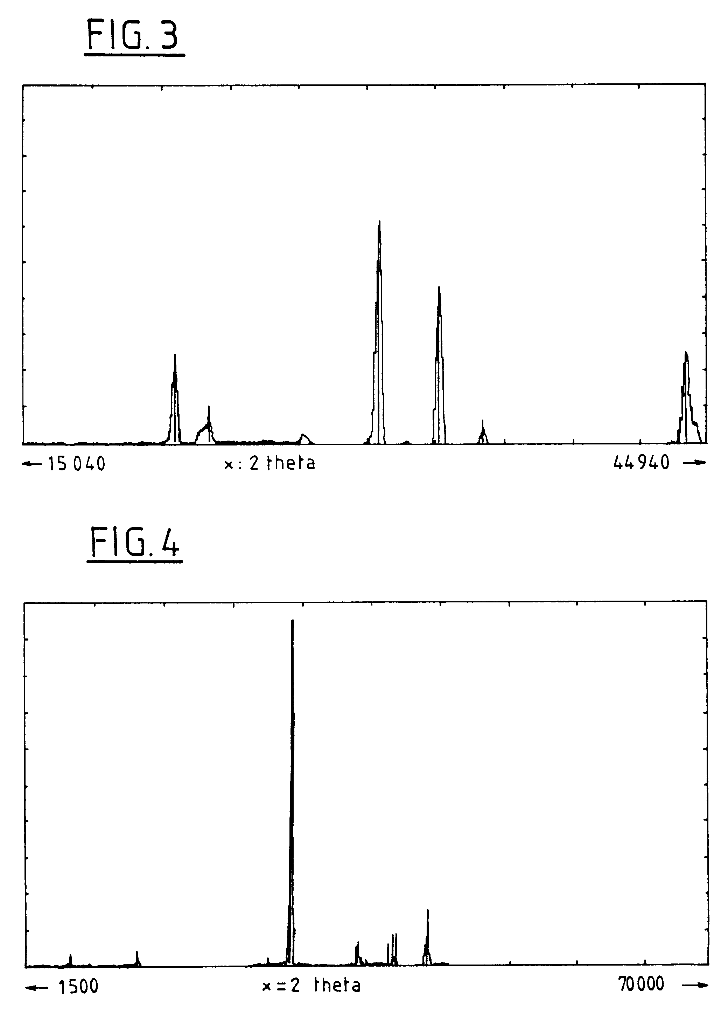

Par ailleurs, ce même composé (III) selon ce mode particulier présente un spectre obtenu par diffraction des rayons X (raie Kα du cuivre) correspondant à la figure 3 et dont les raies sont répertoriées dans le tableau ci-dessous, selon la codification donnée auparavant :

| n° raies | 1 | 2 | 3 | 4 | 5 | 6 |
|---|---|---|---|---|---|---|
| d (h,k,l,) | 4,100 | 3,832 | 2,919 | 2,689 | 2,550 | 2,050 |
| intensités | mf | f | TF | mF | tf | mf |

L'invention concerne enfin un quatrième groupe de composés (IV).

Celui-ci est à base de titane aux degrés d'oxydation (III) et (IV). En outre, il comprend une terre-rare éventuellement partiellement substituée par au moins un troisième élément choisi parmi le calcium, le bismuth, le thallium et le thorium. Ladite terre-rare peut être choisie parmi le lanthane, le cérium, le néodyme et plus particulièrement le praséodyme et de l'oxygène.

Ce dernier groupe de composé présente un rapport atomique du titane à la somme des terres-rares est de 0,66.

Sans volonté là encore de se limiter, les composés (IV) présenteraient de manière générale des analogies structurales avec les phases d'Aurevillius du type $Bi_3TiNbO_9$.

Il est à noter que ces composés, pour lesquels le rapport du titane au second élément et le rapport titane (III), titane (IV) sont fixés, présentent des spectres de diffraction des rayons X homologues, selon la nature du second élément. Ainsi ils présentent un spectre ayant les mêmes raies pour des distances respectives sensiblement identiques ou voisines ainsi que des intensités de raies les unes par rapport aux autres sensiblement maintenues d'un spectre à l'autre.

Par ailleurs, le composé (IV) se présente sous la forme d'une maille cristalline quadratique ou possédant éventuellement un caractère léger d'orthorhombicité. En effet, il n'est pas possible, étant donné la précision des mesures, de déterminer si les paramètres a et b de la maille sont parfaitement identiques ou non.

Plus particulièrement un composé (IV) à base de praséodyme présente les paramètres de mailles suivants :

a = 5,48 Å avec b égal ou sensiblement égal à a
c = 27,4 Å.

Ce même composé (IV) présente enfin un spectre de diffraction des rayons X correspondant à la figure 4 (raie Kα du cuivre) dont les raies sont répertoriées ci-dessous, selon les codes donnés précédemment.

| N° raie | 1 | 2 | 3 | 4 | 5 |
|---|---|---|---|---|---|
| d (h,k,l,) | 13,7912 | 6,8610 | 3,4391 | 3,1801 | 2,5793 |
| intensité | tf | tf | tf | TF | tf |

| N° raie | 6 | 7 | 8 | 9 | 10 |
|---|---|---|---|---|---|
| d (h,k,l,) | 2,3704 | 2,3500 | 2,3299 | 2,1695 | 2,1603 |
| intensité | tf | tf | tf | tf | tf |

Il est à noter que ces composés, pour lesquels le rapport du titane au second élément et le rapport titane (III), titane (IV) sont fixés, présentent des spectres de diffraction des rayons X homologues, selon la nature du second élément. Ainsi ils présentent un spectre ayant les mêmes raies pour des distances respectives sensiblement identiques ou voisines ainsi que des intensités de raies les unes par rapport aux autres sensiblement maintenues d'un spectre à l'autre.

La présente invention concerne aussi un composé défini par son procédé d'obtention.

Ce composé est à base d'un premier élément se présentant au moins pour une partie à l'état réduit au sens donné plus haut et choisi parmi les groupes 4A et 5A, d'au moins un second élément choisi parmi les terre-rares, éventuellement partiellement substitué par un troisième élément choisi dans les groupes 2A, 3B, 5B et des actinides et d'oxygène.

De plus ce composé ne doit pas correspondre à la formule suivante :

$AB_xO_y$

dans laquelle :

A représente une terre-rare,

B représente le titane ou le vanadium,

$x = 1$,

$Y = 3$.

La caractéristique de ce composé est qu'il est susceptible d'être obtenu en préparant un composé intermédiaire comprenant un premier élément à l'état oxydé au sens donné plus haut, au moins un second élément éventuellement partiellement substitué par un troisième et de l'oxygène.

Ledit composé intermédiaire est obtenu :

– soit en mélangeant une solution d'un sel ou un sol d'oxyde d'un premier élément précité et une solution d'un sel d'au moins un second élément précité, en séchant ledit mélange et en calcinant le produit résultant;

– soit en formant une solution des sels d'un premier élément précité et d'au moins un second élément précité, en faisant réagir un agent précipitant avec ladite solution, en séchant le précipité obtenu, et en calcinant le produit séché;

le composé intermédiaire ainsi obtenu subissant en outre une calcination complémentaire sous une atmosphère réductrice.

Il est à noter que tout ce qui a été dit précédemment en ce qui concerne le procédé de préparation s'applique entièrement ici et rentre dans la définition du produit.

Des exemples concrets mais non limitatifs vont maintenant être présentés.

Exemple 1 : Préparation du composé de départ.

On part de 5300 g d'un sol de titane à 15 % en poids de $TiO_2$.

Le pH de la suspension est de 2.

On mélange ensuite le sol de titane à 4350 g d'une solution de nitrate de praséodyme en solution aqueuse.

Après homogénéisation du mélange par agitation, celui-ci est séché par atomisation.

Le séchage a lieu dans le réacteur "flash" décrit dans le brevet français n° 2 431 321 .

La température d'entrée des gaz est de 550°C, la température de séchage est de 150°C.

2,45 kg de produit sont récupérés. Celui-ci est constitué d'agglomérats sphériques de granulométrie comprise entre 1 et 10 $\mu$m.

Il est ensuite calciné sous air à 1150°C pendant 6 heures.

L'analyse du produit calciné indique un composé de formule chimique $Pr_2Ti_2O_7$.

Exemple 2 : Préparation d'un composé du groupe (I)

On calcine 200 g du produit obtenu dans l'exemple 1 dans un creuset en graphite sous un mélange de 10% de méthane dans l'argon.

L'épaisseur de lit est de 15 mm.

Le cycle de température est le suivant :

– 1400°C à une vitesse de 200°C/h

– 1500°C à une vitesse de 20°C/h

– refroidissement à l'inertie du four.

L'analyse par diffraction des rayons X indique que le produit obtenu comprend environ 90% d'un composé (I) et 10% d'un composé (II).

L'analyse chimique du composé (I) indique la composition chimique suivante : $PrTiO_{3,1}$.

Exemple 3 : Préparation d'un composé du groupe (II).

On calcine 200 g du composé de départ obtenu dans l'exemple 1 dans un creuset en graphite à une température de 1600°C sous un gaz comprenant 10 % d'hydrogène dans l'argon.

L'épaisseur de lit est d'environ 10 cm.

La montée en température est de 200°C/h.

La durée du palier à 1600°C est de 3 heures.

Le produit est ensuite refroidi à l'inertie du four.

L'analyse du composé résultant montre que l'on obtient majoritairement le composé de type (II).

La composition chimique approximative serait $Pr_4Ti_3O_{11,5}$.

L'analyse par diffraction des rayons X donne un spectre correspondant à la figure 2.

Les raies sont indexées ci-dessous:

| n° raie | 1 | 2 | 3 | 4 | 5 | 6 | 7 | 8 | 9 |
|---|---|---|---|---|---|---|---|---|---|
| d (h,k,l,) | 15,284 | 7,728 | 5,159 | 3,879 | 3,110 | 2,501 | 2,570 | 2,281 | 2,230 |
| intensité | tf | tf | tf | tf | TF | tf | f | tf | mf |

Les paramètres de la maille sont les suivants :
– b = 5,406 Å et b est égal ou sensiblement égal à a
– c = 31,19 Å.

**Revendications**

1. Procédé de préparation d'un composé à base d'un premier élément choisi dans les groupes 4A ou 5A de la classification périodique des éléments, présentant au moins pour une partie un nombre d'oxydation inférieur au nombre d'oxydation maximum de ce premier élément, d'au moins un second élément choisi parmi les terres-rares éventuellement partiellement substitué par au moins un troisième élément choisi dans les groupes 2A, 3B, 5B ou des actinides et d'oxygène, caractérisé en ce que l'on prépare un composé intermédiaire comprenant ledit premier élément dans un état d'oxydation plus élevé que celui dans lequel il est présent dans le composé préparé, au moins un second élément éventuellement substitué par au moins un troisième et de l'oxygène, en mélangeant une solution d'un sel ou un sol d'oxyde d'un premier élément précité et une solution d'un sel d'au moins un second élément précité; en sèchant ledit mélange et en calcinant le produit résultant; le composé intermédiaire ainsi obtenu subissant en outre une calcination complémentaire sous une atmosphère réductrice.

2 - Procédé de préparation d'un composé à base d'un premier élément choisi dans les groupes 4A ou 5A de la classification périodique des éléments, présentant au moins pour une partie un nombre d'oxydation inférieur au nombre d'oxydation maximum de ce premier élément, d'au moins un second élément choisi parmi les terres-rares éventuellement partiellement substitué par au moins un troisième élément choisi dans les groupes 2A, 3B, 5B ou des actinides et d'oxygène, caractérisé en ce que l'on prépare un composé intermédiaire comprenant ledit premier élément dans un état d'oxydation plus élevé que celui dans lequel il est présent dans le composé préparé, au moins un second élément éventuellement substitué par au moins un troisième et de l'oxygène en formant une solution des sels d'un premier élément précité et d'au moins un second élément précité; en faisant réagir un agent précipitant avec ladite solution; en séchant le précipité obtenu, et en calcinant le produit séché, le composé intermédiare ainsi obtenu subissant en outre une calcination complémentaire sous une atmosphère réductrice.

3. Procédé selon la revendication 1 ou 2, caractérisé en ce que l'on choisit le titane, le vanadium ou le niobium en tant que premier élément.

4. Procédé selon l'une des revendications précédentes, caractérisé en ce que l'on choisit en tant que troisième élément, le calcium, le thallium, le bismuth, ou le thorium.

5. Procédé selon l'une des revendications précédentes, caractérisé en ce que le composé intermédiaire comprend à titre de terre-rare au moins un élément choisi parmi le lanthane, le cérium, le praséodyme et le néodyme.

6. Procédé selon l'une des revendications précédentes, caractérisé en ce que l'atmosphère réductrice est constituée par du méthane, par de l'hydrogène, seuls ou en mélange, purs ou dilués dans un gaz inerte.

7. Procédé selon l'une des revendications précédentes, caractérisé en ce que l'on calcine sous atmosphère réductrice le composé intermédiaire dans des conditions telles qu'il y ait au moins fusion partielle de la masse réactionnelle.

8. Procédé selon l'une des revendications précédentes, caractérisé en ce que l'on prépare un composé intermédiaire comprenant du titane, au moins un second élément éventuellement partiellement substitué par au moins un troisième élément et de l'oxygène et en ce que l'on calcine ce composé intermédiaire dans des conditions telles que le rapport atomique du titane à la somme des terres-rares est compris entre 0,5 et 1,6.

**9.** Procédé selon l'une des revendications précédentes, caractérisé en ce que l'on effectue après la calcination sous atmosphère réductrice, un traitement de recuit sous une atmosphère réductrice ou sous vide.

**10.** Procédé selon la revendication 9, caractérisé en ce que l'on sèche le mélange précité par atomisation par injection de celui-ci dans des gaz ayant une vitesse suffisante pour atomiser le mélange, plus particulièrement en injectant ledit mélange suivant une trajectoire confondue avec l'axe de symétrie d'un écoulement hélicoïdal et puits-tourbillon de gaz chauds assurant la pulvérisation puis le séchage.

**11.** Composé correspondant à la formule suivante :

$$AB_xO_y \quad \text{(I)}$$

dans laquelle :

. A représente au moins un élément choisi parmi les terres-rares, A étant éventuellement partiellement substitué par au moins un troisième élément choisi dans les groupes 2A, 3B, 5B ou des actinides de la classification périodique des éléments,

. B représente un élément choisi dans le groupe 4A ou 5A de la classification périodique des éléments,

. x et y vérifient les inégalités suivantes :

$2,5 \leq y \leq 4$

. si $x < 1$

$1,5 + 1,25x \leq y \leq 1,5 + 1,75x$

. si $x \geq 1$

$1,5 + 1,25\, x \leq y \leq 1,5 + 1,5\, x$

. à l'exclusion des composés de formule (I) dans laquelle A est une terre-rare, B est le titane ou le vanadium, $x = 1$ et $y = 3$.

**12.** Composé selon la revendication 11, caractérisé en ce que l'élément B est majoritairement ou entièrement présent à un nombre d'oxydation inférieur au nombre d'oxydation maximum.

**13.** Composé selon l'une des revendications 11 ou 12, caractérisé en ce que l'élément B est le titane.

**14.** Composé selon l'une des revendications 11 ou 12, caractérisé en ce que l'élément B est choisi parmi le vanadium ou le niobium.

**15.** Composé selon l'une des revendications 11 à 14, caractérisé en ce que l'élément A est choisi parmi les terres-rares et plus particulièrement dans le groupe comprenant le lanthane, le cérium, le praséodyme et le néodyme.

**16.** Composé selon l'une des revendications 11 à 15, caractérisé en ce que l'élément B est partiellement substitué par au moins un troisième élément choisi parmi le calcium, le thallium, le bismuth et le thorium.

**17.** Composé selon l'une des revendications 11 à 16, caractérisé en ce que x varie entre 1,6 et 1.

**18.** Composé selon l'une des revendications 11 à 16, caractérisé en ce que x varie entre 0,5 et 1.

**19.** Composé selon les revendications 13, 15 et 16 ou 17, caractérisé en ce qu'il correspond à l'une des formules suivantes : $PrTiO_{2,79}$ ; $PrTi_{0,83}O_{2,75}$ ; $PrTi_{0,77}O_{2,61}$

**20.** Composé selon les revendications 13, 15 et 16, caractérisé en ce qu'il correspond à la formule suivante :

$PrTi_{1,6}O_{3,83}$

**21.** Composé selon la revendication 20, caractérisé en ce que sesparamètres de maille sont les suivants :

$a = 5,51$ Å avec b égal ou sensiblement égal à a,

$c = 7,63$ Å.

**22.** Composé selon l'une des revendications 20 ou 21, caractérisé en ce que son spectre obtenu par diffraction des rayons X comprend les raies suivantes :

| n° raie | 1 | 2 | 3 | 4 | 5 | 6 | 7 |
|---|---|---|---|---|---|---|---|
| d (h,k,l,) | 3,886 | 2,751 | 2,704 | 2,574 | 2,247 | 2,946 | 1,888 |
| intensité | f | TF | tf | tf | f | F | tf |

| n° raie | 8 | 9 | 10 | 11 | 12 | 13 |
|---|---|---|---|---|---|---|
| d (h,k,l,) | 1,741 | 1,702 | 1,697 | 1,589 | 1,378 | 1,374 |
| intensité | tf | tf | tf | m | f | f |

**23.** Composé à base de titane aux degrés d'oxydation (III) et (IV), d'au moins une terre-rare plus particulièrement choisie parmi le lanthane, le cérium, le néodyme et le praséodyme, et d'oxygène, caractérisé en ce que le rapport atomique du titane à la somme des terres-rares varie entre 0,90 et 0,75.

**24.** Composé selon la revendication 23, caractérisé en ce que le paramètre c de la maille est de 31,2 ± 0,2 Å.

**25.** Composé selon l'une des revendications 23 ou 24, caractérisé en ce que la terre-rare est le praséodyme et en ce que son spectre obtenu par diffraction des rayons X comprend les raies suivantes :

| n° raie | 1 | 2 | 3 | 4 | 5 | 6 | 7 | 8 | 9 |
|---|---|---|---|---|---|---|---|---|---|
| d (h,k,l,) | 15,284 | 7,728 | 5,159 | 3,879 | 3,110 | 2,501 | 2,570 | 2,281 | 2,230 |
| intensité | tf | tf | tf | tf | TF | tf | f | tf | mf |

**26.** Composé selon la revendication 25, caractérisé en ce que les paramètres de la maille sont les suivants :
a = 5,406 Å et b égal ou sensiblement égal à a,
c = 31,19 Å.

**27.** Composé selon l'une des revendications 23 ou 24, caractérisé en ce que la terre-rare est le néodyme et en ce que le paramètre c de la maille vaut 31,2 Å.

**28.** Composé selon l'une des revendications 23 à 24, caractérisé en ce que la terre-rare est le lanthane et en ce que le paramètre c de la maille vaut 31,27 Å.

**29.** Composé à base de titane aux degrés d'oxydation (III) et (IV), d'au moins une terre-rare éventuellement partiellement substituée par au moins un troisième élément, ladite terre-rare étant plus particulièrement choisie parmi le lanthane, le cérium, le praséodyme et le néodyme, et d'oxygène, caractérisé en ce que le rapport atomique du titane à la somme des terres-rares varie entre 1 et 0,95.

**30.** Composé selon la revendication 29, caractérisé en ce que la terre-rare est le praséodyme et en ce que les paramètres de la maille sont les suivants :
a = 5,1 Å ; b = 7,75 Å ; c = 27,55 Å.

**31.** Composé selon la revendication 30, caractérisé en ce que le spectre obtenu par diffraction des rayons X comprend les raies suivantes :

| n° raies | 1 | 2 | 3 | 4 | 5 | 6 |
|---|---|---|---|---|---|---|
| d (h,k,l,) | 4,100 | 3,832 | 2,919 | 2,689 | 2,550 | 2,050 |
| intensités | mf | f | TF | mF | tf | mf |

32 - Composé à base de titane aux degrés d'oxydation (III) et (IV), d'au moins une terre-rare éventuellement partiellement substituée par au moins un troisième élément et ladite terre-rare étant plus particulièrement choisie parmi le lanthane, le cérium, le néodyme et le praséodyme, et d'oxygène, caractérisé en ce que le rapport atomique du titane à la somme des terres-rares est de 0,66.

33 - Composé selon la revendication 32, caractérisé en ce que la terre-rare est le praséodyme et en ce que son spectre obtenu par diffraction des rayons X comprend les raies suivantes :

| N° raie | 1 | 2 | 3 | 4 | 5 |
|---|---|---|---|---|---|
| d (h,k,l,) | 13,7912 | 6,8610 | 3,4391 | 3,1801 | 2,5793 |
| intensité | tf | tf | tf | TF | tf |

| N° raie | 6 | 7 | 8 | 9 | 10 |
|---|---|---|---|---|---|
| d (h,k,l,) | 2,3704 | 2,3500 | 2,3299 | 2,1695 | 2,1603 |
| intensité | tf | tf | tf | tf | tf |

34 - Composé selon la revendication 33, caractérisé en ce que les paramètres de la maille sont les suivants :

a = 5,48 Å avec b égal ou sensiblement égal à a

c = 27,4 Å

35 - Composé à base d'un premier élément choisi dans les groupes 4A ou 5A de la classification périodique des éléments, présentant au moins pour une partie un nombre d'oxydation inférieur au nombre d'oxydation maximum de ce premier élément, d'au moins un second élément choisi parmi les terres-rares éventuellement partiellement substitué par au moins un troisième élément choisi dans les groupes 2A, 3B, 5B ou des actinides et d'oxygène, à l'exception des composés correspondant à la formule suivante :

$$(I) \qquad AB_xO_y$$

dans laquelle

A est une terre-rare

B est le titane ou le vanadium,

x = 1 et y = 3,

caractérisé en ce qu'il est susceptible d'être obtenu en préparant un composé intermédiaire comprenant un premier élément dans un état d'oxydation plus élevé que celui dans lequel il est présent dans le composé préparé, au moins un second élément éventuellement partiellement substitué par au moins un troisième et de l'oxygène, ledit composé intermédiaire étant obtenu :

– soit en mélangeant une solution d'un sel ou un sol d'oxyde d'un premier élément précité et une solution d'un sel d'au moins un second élément précité, en séchant ledit mélange et en calcinant le produit résultant;

– soit en formant une solution des sels d'un premier élément précité et d'au moins un second élément précité, en faisant réagir un agent précipitant avec ladite solution, en séchant le précipité obtenu, et en calcinant le produit séché;

le composé intermédiaire ainsi obtenu subissant en outre une calcination complémentaire sous une atmosphère réductrice.

36 - Composé selon la revendication 35, caractérisé en ce qu'il est susceptible d'être obtenu en calcinant un composé intermédiaire comprenant du niobium ou du vanadium en tant que premier élément.

**37 -** Composé selon l'une des revendications 35 à 36, caractérisé en ce que l'on utilise un composé intermédiaire obtenu à partir d'un mélange comprenant une solution d'un sel ou un sol de l'oxyde d'un premier élément précité, une solution d'un sel d'au moins un second élément précité et par injection dudit mélange suivant une trajectoire confondue avec l'axe de symétrie d'un écoulement hélicoïdal et puits-tourbillon de gaz chauds assurant la pulvérisation puis le séchage.

## FIG.1

← 5000      x: 2 theta      70 000 →

## FIG.2

← 4840      x = 2 theta      41000 →

## FIG. 3

←— 15 040      x : 2 theta      44 940 —→

## FIG. 4

←— 1500      x = 2 theta      70 000 —→

**Office européen des brevets**

# RAPPORT DE RECHERCHE EUROPEENNE

Numero de la demande

EP    91 40 3519

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | CHEMICAL ABSTRACTS, vol. 82, no. 10, 10 Mars 1975, Columbus, Ohio, US; abstract no. 61306U, GOLUB: 'rare earth element vanadites' page 239 ; * abrégé * & SU-A-436 025 (KIEV STATE UNIVERSITY) --- | 2,3,6 | C01G23/00 C01G31/00 C01G33/00 C01B13/14 |
| X | CHEMICAL ABSTRACTS, vol. 89, no. 10, 4 Septembre 1978, Columbus, Ohio, US; abstract no. 83952Y, BAZUEV: 'synthesis and x-ray diffraction studies of phases of variable composition ln2/3+xtio3+/-y with perovskite structure' page 576 ; * abrégé * --- | 11,13, 15,17,18 | |
| A | EP-A-0 193 460 (RHONE-POULENC) <br><br> * revendications 1,3; exemples 1,2 * --- | 1,3,5,8, 10,35,36 | |
| A | FR-A-2 104 977 (ORDENA TRUDOVOGOKRASNOGO ZNAMENI ) --- | | **DOMAINES TECHNIQUES RECHERCHES (Int. Cl.5 )** |
| A | FR-A-2 364 857 (UNION CARBIDE) --- | | C01G C01B |
| A | ZEITSCHRIFT FUR ANORGANISCHE UND ALLGEMEINE CHEMIE. vol. 415, 1975, LEIPZIG DD pages 275 - 284; T.PALANISAMY: 'studies on some ternary oxides of avo3 composition' * page 275 - page 276 * ----- | 1-3 | |

Le présent rapport a été établi pour toutes les revendications

| Lieu de la recherche | Date d'achèvement de la recherche | Examinateur |
|---|---|---|
| LA HAYE | 27 MARS 1992 | LIBBERECHT-VERBEECK |